Europäisches Patentamt

(19) European Patent Office

Office européen des brevets

(11) Numéro de publication: **0 233 434**
**B1**

(12) **FASCICULE DE BREVET EUROPEEN**

(45) Date de publication du fascicule du brevet:
08.03.89

(51) Int. Cl.⁴: **B29C 47/04, B29C 47/06**

(21) Numéro de dépôt: **86402972.3**

(22) Date de dépôt: **31.12.86**

(54) **Dispositif de répartition de matière thermoplastique pour la fabrication de feuilles multicouches.**

(30) Priorité: **17.01.86 FR 8600647**

(43) Date de publication de la demande:
**26.08.87 Bulletin 87/35**

(45) Mention de la délivrance du brevet:
**08.03.89 Bulletin 89/10**

(84) Etats contractants désignés:
**AT BE CH DE ES FR GB GR IT LI LU NL SE**

(56) Documents cités:
**DE-A- 2 554 239**
**FR-A- 2 437 289**
**FR-A- 2 559 419**
**FR-A- 2 559 419**
**FR-A- 2 559 420**
**US-A- 3 909 170**

(73) Titulaire: **ONO Société dite:, Boîte postale 7,
F-28700 Auneau(FR)**

(72) Inventeur: **Touchet, Daniel,Jacques, 7, rue de la Dalone
Jouy, 28300 MAINVILLIERS(FR)**

(74) Mandataire: **Bressand, Georges et al, c/o CABINET
LAVOIX 2 Place d'Estienne d'Orves, F-75441 Paris
Cedex 09(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à la fabrication de feuilles comprenant des couches superposées de matière thermoplastique ou autre, par extrusion simultanée de divers matériaux, puis par réunion de ceux-ci avant leur introduction dans une filière.

Pour réunir les matériaux en évitant leur mélange, on les introduit en des écoulements coaxiaux, ou tout au moins parallèles, dans le canal d'entrée d'une filière. L'utilisation d'écoulements cylindriques coaxiaux permet d'obtenir une feuille comprenant une couche interne et au moins une couche en enveloppe autour de cette couche interne. La feuille est toujours constituée par un matériau sandwich dans lequel les couches sont disposées de façon symétrique ou non par rapport à la couche interne.

Pour remédier à cela, on a déjà envisagé de disposer sur le trajet des écoulements des cloisons radiales de façon à diviser les écoulements extérieurs et à permettre d'injecter des matières différentes de chaque côté de la couche interne. Dans d'autres cas, on utilise des conduits parallèles séparés par des cloisons, dans lesquels on introduit les différentes matières qui ne viennent en contact l'une de l'autre qu'au bout d'un certain trajet parallèle de façon à éviter tout risque d'écoulement turbulent et de mélange.

On connaît également dans le FR-A 2 437 289, au nom de la Demanderesse, un dispositif d'alimentation d'une filière de fabrication de feuilles en matière thermoplastique multicouches qui est raccordé à au moins deux extrudeuses de matière thermoplastique et dans lequel plusieurs écoulements de matière sont réunis dans un canal central raccordé à l'entrée de la filière. Ce dispositif comporte un ensemble d'éléments juxtaposés définissant le canal central, raccordé à l'entrée de la filière un bloc d'entrée disposé à une extrémité dudit ensemble juxtaposés et dans lequel sont pratiqués des passages raccordés respectivement auxdites arrivées, chaque élément comportant au moins un canal radial débouchant dans le canal central et communiquant avec l'un des passages du bloc d'entrée, éventuellement par l'intermédiaire de passages pratiqués dans les éléments situés en aval par rapport à l'écoulement de la matière.

Grâce à cette disposition, chaque élément de l'ensemble d'éléments juxtaposés est affecté à une couche ou à des couches bien déterminées du boudin de matière multicouches introduit dans la filière.

Cette disposition implique une arrivée successive de chacun des flux sur ce boudin central de matière qui sera lui-même finalement introduit dans la filière.

La régularité et l'homogénéité du boudin fourni à la filière dépendent notamment de celles des extrudeuses, des viscosités relatives des matières plastiques utilisées et également des dimensions des divers canaux et passages d'alimentation. Par ailleurs, les profils des divers passages et canaux déterminent dans une mesure importante la forme de la section transversale de la veine de matière apportée au boudin principal dans le canal central.

Par conséquent, la forme de la section transversale des différentes veines du boudin de sortie doivent être choisies au préalable par le dimensionnement approprié des passages et des canaux.

D'autre part, pour adapter un élément déterminé à un matériau déterminé fourni par les extrudeuses, il faut changer la forme des passages radiaux de l'élément correspondant. Par conséquent, ces opérations d'adaptation doivent être effectuées avant le fonctionnement de l'installation, en procédant au démontage du dispositif.

Pendant le fonctionnement, la répartition du matériau de chaque couche sur la surface du matériau adjacent peut être corrigée par une modification de la viscosité relative des matériaux par réglage de température des matières introduites.

Or, la plage de réglage de la température est étroite, car pour une température trop basse, on risque d'obstruer les passages radiaux des anneaux, et pour une température trop élevée, on risque de brûler la matière. De plus, le temps de réaction à la suite de chaque changement de température est relativement long, si bien que ce seul moyen de réglage en fonctionnement ne permet pas d'obtenir une précison satisfaisante du profil des différentes couches de façon rapide et aisée.

L'invention a pour but de fournir un dispositif de répartition de la matière thermoplastique introduite pour l'alimentation d'une filière de formation de feuilles multicouches, dont la construction est très simple et qui permet, moyennant une opération facile à exécuter, de régler et d'ajuster pendant le fonctionnement le profil des différentes veines de matière dans le répartiteur de façon à obtenir la répartition adéquate en sortie de la filière, tout en évitant les perturbations pendant les réglages.

L'invention a donc pour objet un dispositif de répartition de la matière thermoplastique ou analogue introduite dans un ensemble d'alimentation d'une filière de fabrication de feuilles multicouches qui est raccordé à au moins deux arrivées de matière thermoplastique et qui comporte un ensemble d'éléments juxtaposés de manière à définir un canal central raccordé à l'entrée de la filière, un bloc d'entrée disposé à une extrémité dudit ensemble d'éléments juxtaposés et dans lequel sont pratiqués des passages raccordés respectivement auxdites arrivées, chaque élément comportant au moins un canal radial débouchant dans ledit canal central et communiquant avec l'un des passages du bloc d'entrée, ce dispositif de répartition étant caractérisé en ce qu'il comporte au niveau de la jonction du canal radial d'arrivée de la matière supplémentaire introduite sur la matière réceptrice préalablement introduite dans le canal central, un organe de réglage progressif disposé dans chaque élément correspondant de l'ensemble d'alimentation, de façon à modifier instantanément dans le plan de superposition des matières thermoplastiques la forme de la section transversale de la veine de matière supplémentaire correspondante dans le canal central pour obtenir la répartition souhaitée de cette matière dans la feuille à la sortie de la filière.

D'autres développements avantageux du dispositif selon la présente invention font l'object des revendications dépendantes.

Selon un développement avantageux du dispositif selon l'invention, l'organe de réglage progressif comporte des moyens pour diriger la matière supplémentaire provenant du canal radial vers le canal central et des moyens pour régler la largeur de la veine de la matière introduite par rapport à la largeur dudit canal central, en fonction de la viscosité relative de la matière supplémentaire injectée, de la viscosité relative de la matière réceptrice et des températures d'utilisation de chacune des matières.

D'autres particularités et avantages de l'invention ressortiront de la description qui va suivre, donnée à titre d'exemple non limitatif et en regard des dessins annexés, sur lesquels:

– la figure 1 est une représentation schématique d'une installation de fabrication de feuilles multicouches en matière thermoplastique;

– la figure 2 est une représentation schématique en perspective de l'ensemble d'alimentation muni du dispositif de répartition conforme à l'invention;

– la figure 3 est une vue en coupe dans un plan perpendiculaire à l'axe du canal central du dispositif de répartition conforme à l'invention;

– la figure 4 est une vue en coupe axiale selon la ligne IV–IV de la figure 3;

– la figure 5 est une représentation schématique montrant les différentes positions du dispositif de répartition conforme à l'invention;

– la figure 6 est une vue d'un autre mode de réalisation du dispositif suivant l'invention;

– la figure 7 est une représentation d'un autre mode de réalisation du plot d'injection de la matière.

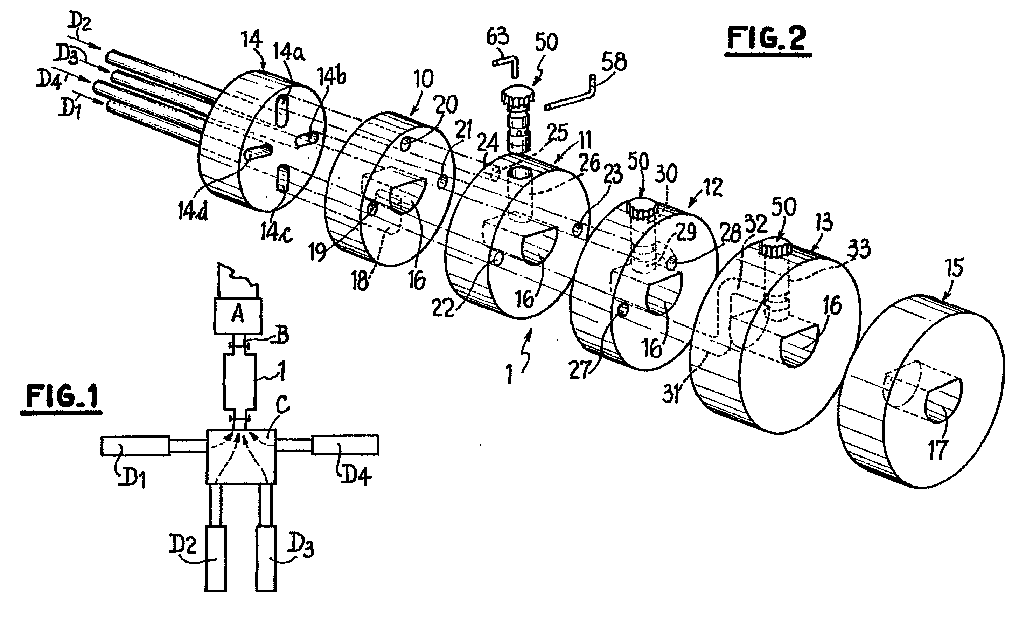

Sur la figure 1, on a représenté le schéma d'une installation de fabrication de feuilles multicouches en matière thermoplastiques ou analogue, comportant un ensemble d'alimentation muni du dispositif de répartition de la matière introduit suivant l'invention. Cette installation comprend une filière A dont l'entrée B est connectée à un ensemble d'alimentation 1. Cet ensemble d'alimentation reçoit, soit directement, soit par l'intermédiaire d'un bloc collecteur C, plusieurs écoulements de matière thermoplastique de natures différentes. Dans l'exemple représenté, cet ensemble est raccordé à quatre extrudeuses D1 à D4.

Comme on peut le voir d'après la figure 2, l'ensemble d'alimentation 1 comporte des éléms juxtaposés, constitués notamment de quatre éléments 10 à 13, placés entre un bloc d'entrée 14 et un bloc de sortie 15 tous deux coaxiaux aux éléments 10 à 13.

L'ensemble de ces pièces sont réunies entre elles par exemple par des tiges filetées non représentées.

Le bloc d'entrée 14 comporte quatre passages 14a à 14d qui, en amont, sont destinés à être raccordés aux extrudeuses respectives D1 à D4 (figure 1).

Les éléments 10 à 13 comportent un orifice central dont l'alignement définit un canal central 16 de l'ensemble d'alimentation 1, canal qui débouche dans un passage central de sortie 17 pratiqué dans le bloc de sortie 15 et destiné à être raccordé à l'entrée B de la filière A.

L'élément 10 comporte dans sa face tournée vers le bloc d'entrée 14, une rainure radiale 18 qui communique avec le passage 14c du bloc d'entrée 14 et qui débouche dans le canal central 16. Cet élément présente en outre trois passages axiaux 19, 20, 21 qui le traverse de part en part et qui sont décalés, dans cet exemple, de 90° par rapport à l'axe des éléments.

L'élément 11 présente tout d'abord deux passages axiaux 22 et 23 communiquant respectivement avec les passages 19 et 21 de l'élément 10. Cet élément 11 comporte également un passage axial 24 aligné sur le passage 20 de l'élément 10 et débouchant, par l'intermédiaire d'un canal radial 25, dans un trou vertical 26 prévu à l'intérieur dudit élément 11. Ce trou vertical 26 traverse la partie supérieure de l'élément 11 et débouche dans le canal central 16. A l'intérieur de ce trou vertical est placé un organe 50 de réglage progressif de la répartition de la matière introduite dans le canal central 16 et provenant du canal radial 25.

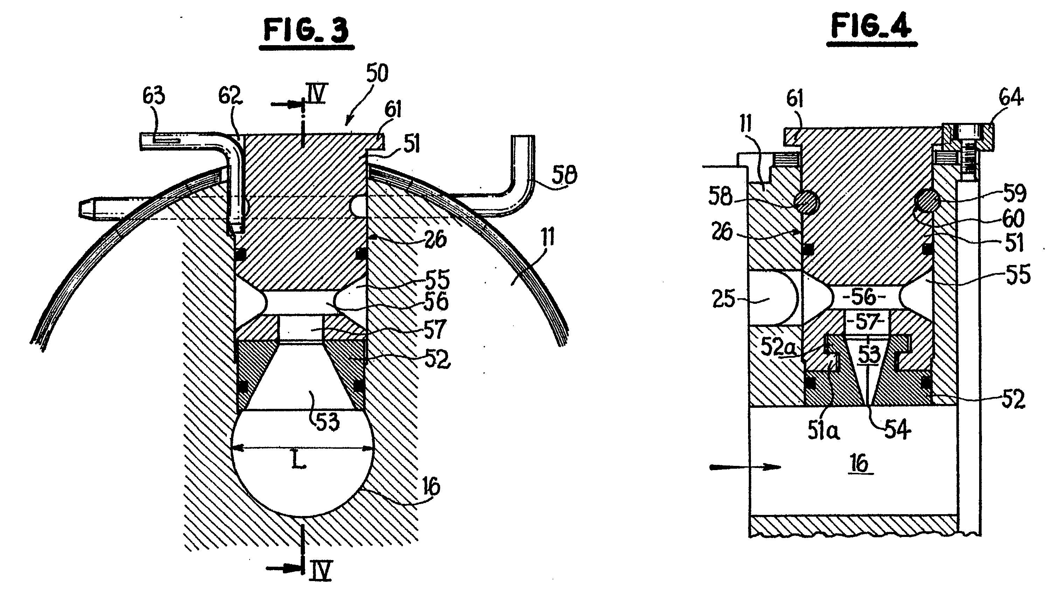

Cet organe de réglage 50 sera décrit plus en détail ultérieurement en se reportant aux figures 3 et 4.

L'élément 12 comporte à son tour, un premier passage axial 27 qui communique avec les passages axiaux 22 et 19 des éléments 11 et 10, respectivement. Cet élément 12 comporte un autre passage axial 28 aligné sur le passage 23 de l'élément 11 et débouchant, par l'intermédiaire d'un canal radial 29, dans un trou vertical 30 prévu à l'intérieur dudit élément 12. Ce trou vertical 30 traverse la partie supérieure de l'élément 12 et débouche dans le canal central 16. A l'intérieur de ce trou vertical est également placé un organe 50 de réglage progressif de la répartition de la matière introduite dans le canal central 16 et provenant du canal radial 29.

L'élément 13 est pourvu d'un passage axial 31 qui communique avec les passages axiaux 27, 22 et 19 des éléments 12, 11 et 10, respectivement. Ce passage axial 31 débouche par l'intermédiaire d'un canal radial 32 dans un trou vertical 33 percé à l'intérieur de l'élément 13. A l'intérieur de ce trou vertical est également placé un organe 50 de réglage progressif de la répartition de la matière à introduire dans le canal central 16 et provenant du canal radial 32. Comme l'élément 13 est le dernier de l'ensemble d'alimentation 1, il ne comporte aucun autre passage de liaison. Chaque organe de réglage 50 agit au niveau de la jonction entre le canal radial (25, 29, 32) d'arrivée de la matière supplémentaire introduite dans le canal central 16.

En se reportant maintenant aux figures 3 et 4, on va décrire plus en détail l'organe de réglage 50 placé par exemple dans l'élément 11, les autres organes de réglage 50 disposés dans les éléments 12 et 13 étant absolument identiques.

Sur ces figures 3 et 4, on voit l'élément 11 avec son canal central 16 dans lequel débouche le trou vertical 26 communiquant avec le canal radial 25 d'arrivée de la matière à introduire dans ledit canal central 16.

A l'intérieur de ce trou vertical 26 est positionné l'organe de réglage 50 qui comporte des moyens pour, d'une part diriger la matière provenant du canal radial 25 vers le canal central 16 et, d'autre part modifier la largeur de la veine de la matière introduite par rapport à la largeur dudit canal central 16.

A cet effet, l'organe de réglage 50 se compose d'un corps cylindrique 51 muni d'un plot d'injection 52 interchangeable et solidaire en rotation avec ledit corps à l'intérieur du trou 26.

Le plot d'injection 52 est pourvu à sa partie supérieure d'un rebord 52a en forme de T (figure 4) qui est introduit dans une rainure correspondante 51a formée à l'intérieur du corps cylindrique 51, permettant ainsi un changement rapide dudit plot lorsque l'ensemble est sorti du trou cylindrique 26.

Le plot d'injection 52 comporte intérieurement un ajutage 53 se terminant à sa partie inférieure par une zone d'injection délimitée par un contour de forme allongée pour l'introduction et la répartition de la matière dans le canal central 16. Cette zone d'injection est par exemple constituée par une fente 54 de section rectangulaire.

Le corps cylindrique 51 est pourvu d'une gorge annulaire 55 qui communique avec l'ajutage 53 du plot d'injection 52 par des petits orifices 56 et 57.

Le corps cylindrique 51 et le plot d'injection 52 sont maintenus dans le trou vertical 26 par exemple par deux goupilles 58 et 59 et positionnés de telle manière que le canal radial 25 d'arrivée de la matière soit mis en communication avec le canal central 16 par la gorge annulaire 55, les petits orifices 56 et 57, et l'ajutage 53. Les goupilles 58 et 59 pénètrent dans des trous prévus à l'intérieur de l'anneau 11 et également dans une gorge circulaire 60 prévue dans le corps 51 ce qui assure le blocage vertical dudit corps tout en permettant sa rotation avec le plot d'injection 52.

Par ailleurs, le corps cylindrique 51 comporte des moyens de positionnement en rotation et de repérage de l'axe longitudinal de la fente 54 du plot d'injection 52 par rapport à l'axe longitudinal du canal central 16.

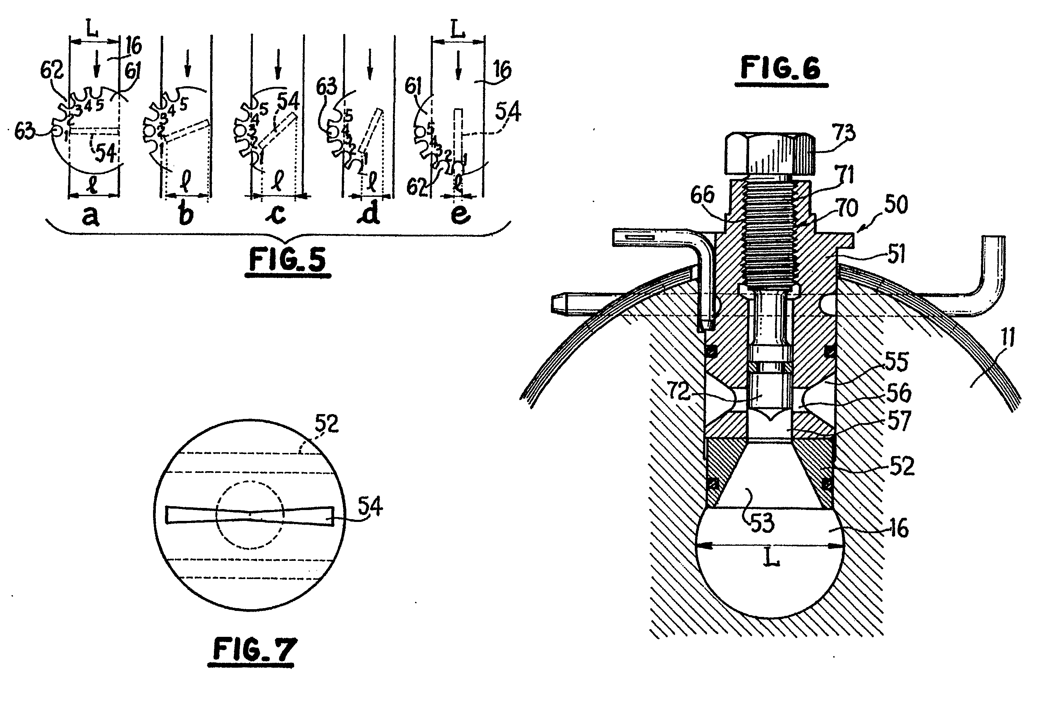

Pour cela, la tête du corps cylindrique 51 est formée par une molette 61 comportant, sur un quart de sa périphérie, des crans 62 (figure 5) pour l'introduction d'une petite goupille 63 qui assure ainsi le blocage de l'ensemble corps cylindrique 51 et plot d'injection 52 et le repérage de la position de la fente 54.

Comme on le voit sur la figure 5, la molette 61 comporte en face de chaque cran 62 des repères de 1 à 5 qui correspondent, par exemple, pour le repère 1 à une position de la fente 54 perpendiculaire au sens d'écoulement de la matière dans le canal central 16, pour le repère 5 une position parallèle au sens d'écoulement de la matière, et pour les repères 2 à 4 à des positions intermédiaires.

La rotation de la molette 61 est limitée, sur 90° correspondant aux crans 62, par une butée 64 (figure 4).

Selon un autre mode de réalisation, le positionnement angulaire de la fente 54 peut être effectué en des positions quelconques dans la plage de 90° nécessaire, à l'aide d'un dispositif de variation continue par exemple du type roue-vis sans fin avec repérage sur un vernier de précision suffisante.

A la sortie de l'ensemble d'alimentation 1, les différentes couches de matière plastique introduites se déplacent avec des vitesses identiques et le boudin composé par ces couches peut ainsi entrer dans la filière A. Les épaisseurs de chaque couche se trouvent dans le produit final en fonction du choix des débits des extrudeuses respectives D1 à D4. La régularité et l'homogénéité du boudin fourni à la filière dépendent notamment de celles des extrudeuses, des viscosités relatives des matières plastiques utilisées et également des divers canaux et passages de l'ensemble d'alimentation.

Par conséquent, en fonction de la viscosité de la matière introduite, de la viscosité de la matière réceptrice, et de la température d'utilisation de chacune des maitères, on détermine et on règle par l'intermédiaire des organes 50 placés dans chacun des éléments 11, 12 et 13, la position de la fente 54 desdits organes 50 pour l'introduction de la matière provenant respectivement des extrudeuses D2 à D4 sur la matière réceptrice préalablement introduite dans l'élément 10 et provenant de l'extrudeuse D1, de façon à former des couches selon la répartition souhaitée.

De plus, si au cours des différents contrôles effectués à la sortie de la filière A sur la feuille finale, on s'aperçoit qu'une des couches ne correspond pas à la répartition désirée, on peut agir immédiatement sur l'organe de réglage 50 correspondant à ladite couche, pour corriger cette imperfection.

En effet, dans le cas où la couche défectueuse présente un profil trop convexe, c'est-à-dire moins épais sur ses bords latéraux, il suffit de modifier la position de la fente 54 en augmentant le rapport l/L, où 1 représente la largeur de la veine de matière introduite et L la largeur du canal central (figure 5), correspondant à la veine de matière réceptrice préalablement introduite.

Par conséquent, on tourne la molette 61 pour placer la goupille 63 dans le cran correspondant par exemple au repère 1 ou 2, et ainsi positionner la fente 54 comme représenté sur les figures 5a ou 5b, ce qui permet d'augmenter la largeur "l" de la veine de matière introduite et donc d'augmenter la quantité de ladite matière introduite sur les bords latéraux du canal central 16.

Par contre, si la couche défectueuse présente un profil trop concave, on modifie la position de la fente 54 en diminuant le rapport l/L. On tourne donc la molette 61 dans le sens inverse pour placer la goupille 63 dans le cran correspondant, par exemple au repère 4 ou 5, comme représenté sur les figures 5d ou 5e. Dans ces positions, on diminue la largeur "l" de la veine de matière introduite, et on augmente donc la quantité de matière introduite sur le centre du canal central 16.

Le dispositif de répartition de la matière injectée suivant l'invention constitue donc dans le plan de superposition des matières thermoplastiques, un moyen d'action rapide et efficace permettant une correction immédiate et des réglages successifs pendant le fonctionnement, ce qui augmente la précision de la répartition de la matière introduite et assure ainsi une production de qualité constante.

De plus, ce dispositif permet de modifier instantanément les réglages dans le cas où l'un des paramètres des différentes matières change et cela sans aucun démontage de l'ensemble d'alimentation. Enfin, ce dispositif permet une multitude de choix de réglage avec une infinité de répartitions entre les deux extrêmes et sans perturbations pendant les réglages.

La figure 6 représente un autre mode de réalisation du dispositif de répartition suivant l'invention. Dans ce cas, on a prévu à l'intérieur du corps cylindrique 51 de l'organe de réglage 50 une vanne 70. Pour cela, le corps cylindrique 51 comporte un orifice axial 66 dans lequel est vissée une tige filetée 71 supportant à sa partie inférieure un boisseau 72 qui débouche dans l'orifice 56 au niveau de la gorge annulaire 55. En tournant la tige filetée par l'intermédiaire de la tête hexagonal 73, on modifie la position du boisseau 72 dans l'orifice 56, ce qui permet d'augmenter ou de diminuer la pression d'arrivée de la matière en amont et par conséquent d'homogénéiser le fonctionnement de l'extrudeuse.

Enfin, les plots d'injection 52 interchangeables peuvent avoir une fente 54 par exemple de section rectangulaire, comme représenté sur les figures 3 à 5.

Bien entendu, en variante, la fente 54 peut avoir une forme quelconque et notamment une section en forme de diabolo (figure 7), ce qui permet dans ce cas, d'avoir un débit de la matière au centre inférieure au débit sur les bords.

**Revendications**

1. Dispositif de répartition de la matière thermoplastique ou analogue introduite dans un ensemble d'alimentation (1) d'une filière A de fabrication de feuilles multicouches qui est raccordé à au moins deux arrivées de matière thermoplastique ou analogue et qui comporte un ensemble d'éléments juxtaposés (10 à 13) de manière à définir un canal central (16) raccordé à l'entrée de la filière A, un bloc d'entrée (14) disposé à une extrémité dudit ensemble d'éléments juxtaposés et dans lequel sont pratiqués des passages (14a à 14c) raccordés respectivement auxdites arrivées, chaque élément (10 à 13) comportant au moins un canal radial (18, 25, 29, 32) débouchant dans ledit canal central (16) et communiquant avec l'un des passages (14a à 14c) du bloc d'entrée (14), ce dispositif de répartition étant caractérisé en ce qu'il comporte, au niveau de la jonction du canal radial (25, 29, 32) d'arrivée de la matière supplémentaire introduite sur la matière réceptrice de base préalablement introduite dans le canal central (16), un organe de réglage progressif (50) disposé dans chaque élément (11, 12, 13) correspondant de l'ensemble d'alimentation (1), de façon à modifier instantément dans le plan de superposition des matières thermoplastiques la forme de la section transversale de la veine de matière supplémentaire correspondante dans le canal central (16) pour obtenir la répartition souhaitée de cette matière dans la feuille à la sortie de la filière.

2. Dispositif selon la revendication 1, caractérisé en ce que l'organe de réglage progressif (50) comporte des moyens pour diriger la matière supplémentaire provenant du canal radial (25, 29, 32) vers le canal central (16) et des moyens pour régler la largeur "l" de la veine de la matière introduite par rapport à la largeur "L" dudit canal central (16), en fonction de la viscosité relative de la matière supplémentaire introduite, de la viscosité relative de la matière réceptrice et des températures d'utilisation de chacune des matières.

3. Dispositif selon les revendications 1 et 2, caractérisé en ce que l'organe de réglage (50) se compose d'un corps cylindrique (51) muni d'un plot d'injection (52) solidaire en rotation avec ledit corps (51) et comportant un ajutage (53) qui débouche dans le canal central (16).

4. Dispositif selon la revendication 3, caractérisé en ce que le corps cylindrique (51) est pourvu d'une gorge annulaire (55) mettant en communication le canal radial (25, 29, 32) d'arrivée de la matière supplémentaire avec l'ajutage (53) du plot d'injection (52) par l'intermédiaire de petits orifices (56, 57).

5. Dispositif selon les revendications 3 et 4, caractérisé en ce que l'ajutage (53) se termine, au niveau du canal central (16), par une zone d'injection délimitée par un contour de forme allongée.

6. Dispositif selon les revendications 5, caractérisé en ce que la zone d'injection est constituée par une fente (54) par exemple de section rectangulaire ou en forme de diabolo.

7. Dispositif selon l'une des revendications précédentes, caractérisé en ce que l'organe de réglage (50) comporte des moyens (61, 62, 63) de positionnement en rotation et de repérage de l'axe longitudinal de la zone d'injection (54) du plot d'injection (52) par rapport à l'axe longitudinal du canal central (16).

8. Dispositif selon la revendication 7, caractérisé en ce que les moyens d'immobilisation et d'indexation de l'organe de réglage (50) sont constitués par une molette (61) prévue à la partie supérieure du corps cylindrique (51) et comportant sur un quart de sa périphérie des crans (62) pour l'introduction d'une petite goupille (63).

9. Dispositif selon l'une des revendicatins précédentes, caractérisé en ce que l'organe de réglage (50) comporte une vanne (70) permettant d'ajuster la pression de la matière supplémentaire en amont et d'homogénéiser le fonctionnement de l'extrudeuse correspondante.

10. Dispositif selon l'une des revendications précédentes, caractérisé en ce que la vanne (70) comporte un boisseau (72) qui débouche dans l'orifice (56) au niveau de la gorge annulaire (55) du corps cylindrique (51) de l'organe de réglage (50).

**Patentansprüche**

1. Vorrichtung zur Verteilung von thermoplastischem oder ähnlichem Stoff, der in eine Zuführanordnung (1) einer Düse A zur Herstellung mehrschichtiger Folien eingeführt wird, die mit wenigstens zwei Zuführungen vom thermoplastischem oder analogem Stoff verbunden ist, und die eine Anordung von benachbarten Elementen (10 bis 13) derart aufweist, um einen zentralen Kanal (16) zu bilden, der mit dem Eingang der Düse A verbunden ist, einen Eingangsblock (14) aufweist, der an einem Ende der Anordnung der benachbarten Elemente angeordnet ist, und in dem Durchtrittsöffnungen (14 bis 14c) vorgesehen sind, die entsprechend mit den Zuführungen verbunden sind, wobei jedes Element (10 bis 13) wenigstens einen radialen Kanal (18, 25, 29, 32) aufweist, der in den zentralen Kanal (16) mündet und mit einer der Durchtrittsöffnungen (14a bis 14c) des Eingangsblocks (14) in Verbindung steht, wobei die Verteilungsvorrichtung dadurch gekennzeichnet ist, daß sie auf der Höhe der Verbindung des radialen Kanals (25, 29, 32) des Eingangs des Zuschlagstoffes, der auf den Basisempfangsstoff gebracht wird, der vorher in den zentralen Kanal (16) eingeführt wird, ein Organ der fortschreitenden bzw. progressiven Regelung (50) aufweist, das in jedem Element (11, 12, 13) angeordnet ist, das der Zuführanordnung (1) entspricht, derart, um augenblicklich (instantanement) in der Ebene der Übereinanderschichtung der thermoplastischen Stoffe die Form des Querschnitts des zusätzlichen zugehörigen Stoffstromes in dem zentralen Kanal (16) zu verändern, um die gewünschte Verteilung dieses Stoffes in der Folie am Ausgang der Düse zu erhalten.

2. Vorrichtung nach Anspruch 1, dadurch gekennzeichnet, daß das progressive Regelungsorgan (50) Mittel aufweist, um den von dem radialen Kanal (25, 29, 32) ankommenden Zuschlagstoff auf den zentralen Kanal (16) zu richten, und Mittel zum Einstellen der Breite "l" des eingeführten Stoffstromes bezüglich der Breite "L" des zentralen Kanals (16) in Abhängigkeit der relativen Viskosität des eingeführten Zuschlagsstoffes, der relativen Viskosität des Aufnahmestoffes und der Verwendungstemperaturen eines jeden der Stoffe aufweist.

3. Vorrichtung nach Anspruch 1 und 2, dadurch gekennzeichnet, daß das Regelungsorgan (50) aus einem zylindrischen Körper (51) aufgebaut ist, der mit einer Einspritzstufe (52) versehen ist, die sich zusammen mit dem Körper (51) dreht und ein Mundstück bzw. einen Stutzen (53) aufweist, der in den zentralen Kanal (16) mündet.

4. Vorrichtung nach Anspruch 3, dadurch gekennzeichnet, daß der zylindrische Körper (51) mit einer ringförmigen Vertiefung (55) versehen ist, die den radialen Kanal (25, 29, 32) der Zufuhr des Zuschlagstoffes mit dem Mundstück (53) der Einspritzstufe (52) mittels kleiner Öffnungen (56, 57) in Verbindung setzt.

5. Vorrichtung nach Anspruch 3 und 4, dadurch gekennzeichnet, daß das Mundstück (53) auf der Höhe des zentralen Kanals (16) durch eine Einspritzzone endet, die durch eine Kontur länglicher Form begrenzt ist.

6. Vorrichtung nach Anspruch 5, dadurch gekennzeichnet, daß die Einspritzzone durch einen Spalt (54) beispielsweise von rechteckiger Form oder stützfußförmig (en forme de diabolo) gebildet ist.

7. Vorrichtung nach einem der vorhergehenden Ansprüche, dadurch gekennzeichnet, daß das Regelungsorgan (50) Mittel zur Drehpositionierung und Ortung der Längsachse der Einspritzzone (54) der Einspritzdüse (52) bezüglich der Längsachse des zentralen Kanals (16) aufweist.

8. Vorrichtung nach Anspruch 7, dadurch gekennzeichnet, daß die Festhaltemittel und Indexierungsmittel des Regelungsorgans (50) durch ein Rändelrad (61) gebildet sind, das im oberen Bereich des zylindrischen Körpers (51) vorgesehen ist und auf einem Viertel seines Umfangs Einkerbungen (62) zum Einführen eines kleinen Stiftes (63) aufweist.

9. Vorrichtung nach einem der vorhergehenden Ansprüche, dadurch gekennzeichnet, daß das Regelungsorgan (50) ein Ventil (70) aufweist, das die Einstellung des Druckes des Zuschlagstoffes oberhalb und das Homogenisieren der Betriebsweise des zugehörigen Extruders erlaubt.

10. Vorrichtung nach einem der vorhergehenden Ansprüche, dadurch gekennzeichnet, daß das Ventil (70) einen Hahnkegel (72) aufweist, der in die Öffnung (56) auf der Höhe der ringförmigen Vertiefung (55) des zylindrischen Körpers (51) des Regelungsorgans (50) mündet.

**Claims**

1. A device for distributing thermoplastic or like material introduced into a feed assembly (1) of a die A for manufacturing multi-layer sheets which is connected to at least two inlets of thermoplastic or like material and which comprises an assembly of elements (10–13) juxtaposed in such manner as to define a central channel (16) connected to the inlet of the die A, an inlet unit (14) disposed at one end of said assembly of juxtaposed elements and in which is provided passageways (14a–14c) respectively connected to said inlets, each element (10–13) comprising at least one radial channel (18, 25, 29, 32) opening into said central channel (16) and communicating with one of the passageways (14a–14c) of the inlet unit (14), said distributing device comprising in the region of the junction of the radial channel (25, 29, 32) supplying the additional material introduced into the basic receiving material previously introduced into the central channel (16), a progressive regulating means (50) disposed in each corresponding element (11, 12, 13) of the feed assembly (1) so as to modify instantaneously in the plane of superimposition of the thermoplastic materials the cross-sectional shape of the corresponding stream of additional material in the central channel (16) so as to obtain the disired distribution of this material in the sheet at the outlet of the die.

2. A device according to claim 1, wherein the progressive regulating means (50) comprises means for conveying the additional material coming from the radial channel (25, 29, 32) to the central channel (16) and means for regulating the width "l" of the stream of material introduced relative to the width "L" of said central channel (16), as a function of the relative viscosity of the additional material introduced, of the relative viscosity of the receiving material and of the temperatures of utilization of each of the materials.

3. A device according to claim 1 an 2, wherein the regulating means (50) comprises a cylindrical body (51) provided with an injection block (52) which is rotationnally fixedly connected to said body (51) and has a nozzle (53) which opens into the central channel (16).

4. A device according to claim 3, wherein the cylindrical body (51) is provided with an annular groove (55) which connects the radial channel (25, 29, 32) supplying the additional material with the nozzle (53) of the injection block (52) through small orifices (56, 57).

5. A device according to claim 3 and 4, wherein the nozzle (53) terminates in the region of the central channel (16) in an injection zone defined by a contour of elongated shape.

6. A device according to claim 5, wherein the injection zone is formed by a slot (54) which has for example a rectangular cross-sectional shape or diabolo cross-sectional shape.

7. A device according to any one of the prceding claims, wherein the regulating means (50) comprises means (61, 62, 63) for positioning in rotation and location the longitudinal axis of the injection zone (54) of the injection block (52) relative to the longitudinal axis of the central channel (16).

8. A device according to claim 7, wherein the means for immobilizing and indexing the regulating means (50) comprise an adjusting wheel (61) provided in the upper part of the cylindrical body (51) and including in a quarter of its periphery notches (62) for the introduction of a small pin (63).

9. A device according to any one of the preceding claims, wherein the regulating means (50) comprises a valve (70) for adjusting the upstream pressure of the additional material and homogenizing the operation of the corresponding extruder.

10. A device according to any one of the preceding claims, wherein the valve (70) includes a valve case (72) which opens into the orifice (56) in the region of the annular groove (55) of the cylindrical body (51) of the regulating means (50).

FIG.2

FIG.1

EP 0 233 434 B1

# FIG. 3

# FIG. 4

EP 0 233 434 B1

FIG.5

FIG.6

FIG.7

EP 0 233 434 B1